# EUROPEAN PATENT SPECIFICATION

(11) **EP 1 833 193 B1**
(45) Date of publication and mention of the grant of the patent: **16.06.2010**
(21) Application number: 06705519.4
(22) Date of filing: 20.01.2006
(51) Int. Cl.: H04L 12/14

(54) **A METHOD FOR PROCESSING THE BEARER**
VERFAHREN ZUR TRÄGERBEARBEITUNG
PROCEDE DE TRAITEMENT DE PORTEUSE

(30) Priority: 20.01.2005 CN 200510006536
(43) Date of publication of application: 12.09.2007
(73) Proprietor: Huawei Technologies Co., Ltd., Longgang District, Shenzhen Guangdong 518129 (CN)
(72) Inventor: DUAN, Xiaoqin Huawei Administration Building, Guangdong (CN)
(74) Representative: Kreuz, Georg Maria
(86) International application number: PCT/CN2006/000098
(87) International publication number: WO 2006/076864

(56) References cited:
- EP-A- 1 693 984
- WO-A-03/065680
- JP-A- 2002 290 634
- US-B2- 6 782 388
- 3RD GENERATION PARTNERSHIP PROJECT: "Overall high level functionality and architecture impacts of flow based charging; stage 2 (Release 6)" 3RD GENERATION PARTNERSHIP PROJECT (3GPP); TECHNICAL SPECIFICATION (TS), XX, XX, vol. 23.125, no. V620, September 2004 (2004-09), pages 1-46, XP002427252

## Description

### Field of the Invention

The present invention relates to the mobile communication technology, and more particularly, to a method and a device for processing a bearer.

### Background of the Invention

Along with development of Internet Protocol (IP) services, how to perform an accurate and appropriate charging and other processing for IP services has been commonly concerned by operators.

For IP services, if an IP network is able to provide various services, such as Email services, Wireless Application Protocol (WAP) based browse services, File Transfer Protocol (FTP) based file transmission services, etc., a terminal may be able to get various services based on one activated Packet Data Protocol Context (PDP Context). In such a case, a bearer (e.g. a PDP context) of the terminal can be used to transmit multiple IP data flows. To perform an accurate and appropriate charging in the case of including multiple IP data flows in a bearer of a terminal, the 3^{rd} Generation Partnership Project (3GPP) puts forwards a Flow Based Charging (FBC) specification. In the case of FBC, IP data flows of different services carried by one PDP context may be filtered by different sieve-like filters, and are charged respectively. Therefore, the FBC is able to provide more charging means for the operators or service providers, compared with the traditional PDP Context based charging.

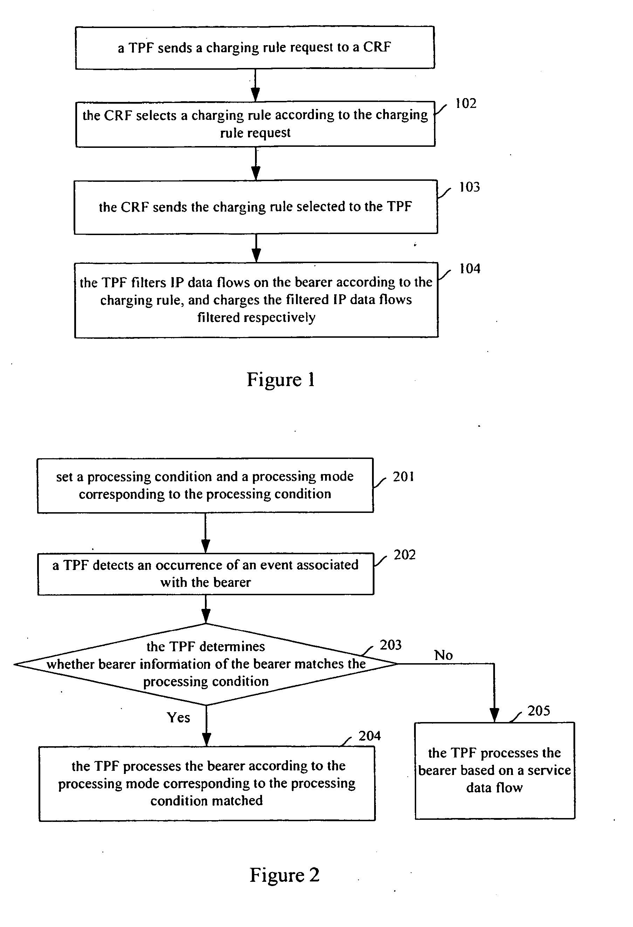

In the case of FBC, 3GPP defines a Service Data Flow Based Charging Rule Function (CRF) and a Traffic Plane Function (TPF). Figure 1 shows a flowchart illustrating a service data flow based charging procedure in the prior art. Referring to Figure 1, the service data flow based charging procedure, with a CRF and a TPF employed, includes the following blocks.

Block 101: A TPF sends a charging rule request to a CRF.

The TPF may send the charging rule request during a bearer establishment, or a bearer modification, or when an event trigger is detected. The event trigger may be provided by the CRF to the TPF, for example, a parameter change of service Quality of Service (QoS).

In addition, the charging rule request sent from the TPF to the CRF carries input information used by the CRF to select a charging rule. The input information may include terminal-associated information bearer attributes, network-associated information, etc.

Block 102: The CRF selects a charging rule according to the charging rule request.

Block 103: The CRF sends the charging rule selected to the TPF.

The charging rule sent from the CRF to the TPF may carry such information as charging mechanism, charging type, charging key, Service Data Flow Filter, charging rule priority, etc.

Block 104: The TPF filters the IP flows in the bearer according to the charging rule, and performs a service data flow based charging for each IP flow filtered.

As can be seen from Figure 1, in the service data flow based charging procedure, the CRF functions as a manager entity, while the TPF functions as an execution entity and performs relevant operations according to massages sent by the CRF. The TPF is unable to participate in the charging control. As a result, when an IP network is upgraded to support the service data flow based charging, for any bearer establishment, the TPF needs to interact with the CRF and the CRF controls charging for each bearer. In actual applications, however, when a network is upgraded to support the service data flow based charging, new attribute, e.g. service data flow based charging introduced into the network may bring great impact on the network at beginning of service deployment. In order to reduce the impact, operators may employ the service data flow based charging in some services while others employ the original charging mode. For example, an operator provides a user with a streaming service and a browse service, the streaming service is charged using a distinguishable charging mode according to different streaming contents, and the browse service may be charged using a same charging mode regardless of browse web contents. In this way, when a network is upgraded to support the service data flow based charging, the solution of employing the service data flow based charging for all bearers may lead to a great deal of redundant messages between the CRF and the TPF.

Document WO 03/065680 A relates to a method and means for setting up multiple Session Description Protocol (SDP) media flows for a PDP (Packet Data Protocol) context. Document 3^{RD} GENERATION PARTNERSHIP PROJECT:" Overall high level functionality and charging; stage 2(release 6) relates to functionality and architecture impacts of Flow Based Charging.

### Summary of the Invention

Embodiments of the present invention provide a method and a device for processing a bearer, to avoid redundancy messages between a service data flow based control entity and an execute entity and to meet network evolution requirements.

A method for charging a bearer may include:
determining by a TPF whether bearer information of a bearer matches a processing condition upon monitoring an occurrence of an event associated with the bearer;
charging the bearer according to a processing mode corresponding to the processing condition if the bearer information matches the processing condition, wherein the processing condition and the processing mode corresponding to the processing condition are preset in the TPF, without interaction with a service data flow based manager entity; or
performing a service data flow based charging for the bearer if the bearer information doe not match the processing condition, said step of performing a service data flow based charging for the bearer comprises interaction with the service data flow based manager entity.
A TPF device for charging a bearer may include:
means for determining whether bearer information of a bearer matches a processing condition upon monitoring an occurrence of an event associated with the bearer;
means for charging the bearer according to a processing mode corresponding to the processing condition if the bearer information matches the processing condition, wherein the processing condition and the processing mode corresponding to the processing condition are preset in the TPF, without interaction with a service data flow based manager entity; and
means for performing a service data flow based charging for the bearer if the bearer information does not match the processing condition, said service data flow based charging for the bearer comprises interaction with the service data flow based manager entity.

As above, in embodiments of the present invention, processing conditions, which can identify specific bearers, and processing modes corresponding to the processing conditions are employed. A TPF is able to perform a service data flow based charging or a general bearer based charging for a designated bearer according to the processing conditions and the processing modes. When a service data flow based charging is used, the TPF requests a charging rule from a service data flow based manager entity, and charges data flows on the bearer according to instructions of the service data flow based manager entity. When a general bearer based charging is used, the TPF charges data flows on the bearer without interaction with the service data flow based manager entity. In this way, data flows on a portion of bearers can be processed using the service data flow based charging and others can be processed using the existing general bearer based charging, which decreases the information interaction between the service data flow based manager entity and the TPF, effectively avoids redundancy information between the service data flow based manager entity and the TPF, and reduces the impact of adding new attributes on the existing network, thereby meeting the network evolution requirements.

### Brief description of the drawings

Figure 1 is a flowchart illustrating a service data flow based charging procedure in the prior art;
Figure 2 is a flowchart of processing a bearer in accordance with an embodiment of the present invention.

### Detailed Description of the Invention

In embodiments of the present invention, a processing condition and a processing mode corresponding to the processing condition are set in a TPF. When the TPF detects that an event associated with a bearer occurs, determines whether bearer information of the event associated with the bearer matches the processing condition. If the bearer information of the event associated with the bearer matches the processing condition, TPF processes the bearer according to the processing mode corresponding to the processing condition matched; otherwise, processes the bearer based on the service data flow.

The following discussion is presented to enable a person skilled in the art to make and use the invention. The general principles described herein may be applied to embodiments and applications other than those detailed below without departing from the spirit and scope of the present invention as defined herein. The present invention is not intended to be limited solely to the embodiments shown, but is to be accorded the widest scope consistent with the principles and features disclosed herein.

Figure 2 is a flowchart of processing a bearer in accordance with an embodiment of the present invention. Referring to Figure 2, the procedure for processing a bearer in accordance with this embodiment may include the followings.

Block 201: Set a processing condition and a processing mode corresponding to the processing condition.

The processing condition includes information identifying a bearer, such as a designated Access Point Name (APN) and/or a designated IP 5 tuple. The IP 5 tuple includes source/destination IP address, source/destination port number, protocol ID of the protocol above IP, etc.

In this block, the processing mode is the processing mode corresponds to the service designated in the processing condition, and may be a General Packet Radio Service (GPRS) general bearer charging mode, i.e. the statistic charging mode based on each PDP context; and/or, a data service general bearer charging mode, etc.

In this block, various ways may be used to set the processing condition and the processing mode corresponding to the processing condition. Mode 1, an operator may set the processing condition and the processing mode corresponding thereto in a TPF directly according to service requirements. Mode 2, a service data flow based manager entity sends the processing condition and the processing mode corresponding thereto to the TPF, and the TPF stores the received processing condition and the processing mode corresponding thereto. The service data flow based manager entity may be a CRF or an entity functions as an enhanced CRF.

When Mode 2 is used, the service data flow based manager entity may send the processing condition and the processing mode corresponding to the processing condition at some specific point. For example, the service data flow based manager entity may send the processing condition and the processing mode corresponding thereto to the TPF at the beginning when the network is upgraded to support the FBC attribute. The service data flow based manager entity may send a changed processing condition and a changed processing mode corresponding to the changed processing condition to the TPF when the processing condition or the processing mode is changed, and the TPF replaces the processing condition and the processing mode stored by the changed processing condition and the changed corresponding processing mode.

Further, to process a bearer according to a designated processing mode when the bearer matches multiple processing conditions simultaneously, priorities of the processing conditions may be set in this block. Modes 1 and 2 for the processing condition and the processing mode corresponding to the processing condition may be used to set the priorities of the processing conditions.

For example, the processing conditions, the processing modes and the priorities corresponding thereto may be as Table 1.

**Table 1**

| Priority | Processing condition | Processing mode |
|---|---|---|
| 1 | APN 1 | Processing mode 1 |
| 2 | APN 2 | Processing mode 2 |
| 3 | IP 5 tuple | Processing mode 3 |

Block 202: A TPF detects an occurrence of an event associated with a bearer.

The event associated with the bearer may be a bearer establishment event, e.g. when the TPF receives a bearer establishment request, a bearer modification event or a bearer deletion event.

Block 203: The TPF determines whether bearer information matches one of the processing conditions; if so, proceeds to Block 204; otherwise, proceeds to Block 205.

The bearer information may be an Access Point Name (APN) and/or an IP 5 tuple of the bearer, etc.

Note that, if priorities of the processing conditions are set, the TPF may compare the bearer information with each of the processing conditions according to the priorities. In other words, the TPF firstly compares the bearer information with the processing condition with a highest priority. If the bearer information does not match the processing condition with the highest priority, the TPF compares the bearer information with the processing condition with a secondary priority, etc., until all the processing conditions are compared.

Block 204: The TPF processes the bearer according to the processing mode corresponding to the processing condition matched.

Note that, if the priorities of the processing conditions are employed, the TPF processes the bearer according to the processing mode corresponding to the one of the processing conditions which has a highest priority.

For example, the preset processing conditions, processing modes and priorities of the processing conditions in Block 201 are as shown in Table 2.

**Table 2**

| Priority | Processing condition | Processing mode |
|---|---|---|
| 1 | APN="ABC" | Processing mode 1: performing a statistic base on each PDP context according to original GPRS mode, and charging data flows using a charging rate corresponding to the APN as "ABC" |
| 2 | APN="cmnet" | Processing mode 2: performing a statistic base on each PDP context according to original GPRS mode, and charging data flows using a charging rate for accessing an Internet data service |
| 3 | APN="cmwap" | Processing mode 3: performing a statistic base on each PDP context according to original GPRS mode, and charging data flows using a charging rate for accessing a WAP data service |
| 4 | Source IP=wildcard, Source port=wildcard Destination IP = 129.0.0.1 Destination port=80 or Source IP=129.0.0.1 Source port=80 Destination IP=wildcard, Destination port=wildcard | Processing mode 4: performing a statistic for data packets meeting the IP 5 tuple, and charging data flows using a charging rate for using a FTP service |

Referring to Table 2, the Blocks 203 and 204 may include followings. According to the priorities of the processing condition, the TPF compares the APN of the bearer with "ABC", "cmnet" and "cmwap" in turn. If the APN of the bearer matches one of the "ABC", "cmnet" and "cmwap", the TPF processes the bearer according to the processing mode corresponding to the processing condition matched. For example, if the APN of the bearer is "cmnet", the TPF processes the bearer using Processing mode 2, i.e. performing a statistic base on each PDP context according to original GPRS mode, and charging data flows using a charging rate for accessing an Internet data service. If the APN of the bearer is unable to match one of the above APNs, the TPF continues to determine whether the IP 5 tuple of the bearer meets processing condition 4, i.e. "Source IP=wildcard, Source port=wildcard, Destination IP=129.0.0.1, Destination port=80" or "Source IP=129.0.0.1, Source port=80, Destination IP=wildcard, Destination port=wildcard". If the IP 5 tuple of the bearer meets processing condition 4, the TPF processes the bearer using Processing mode 4, i.e. performing a statistic for data packets meeting the IP 5 tuple, and charging data flows using a charging rate for using a FTP service.

Block 205: The TPF processes the bearer based on the service data flow.

This procedure is similar to the procedure shown in Figure 1. The TPF sends a charging rule request to the service data flow based manager entity. The service data flow based manager entity selects a charging rule according to the charging rule request, and sends the charging rule selected to the TPF. The TPF filters IP data flows on the bearer according to the charging rule, and charges the filtered IP data flows respectively.

It should be noted that, in the procedure as shown in Figure 2, the processing mode, set in the embodiment of the present invention, is used to charge data flows on a bearer. In other embodiments of the present invention, the processing mode may also be used for other processing. For example, the processing mode may be a general bearer QoS control mode, including a service data based QoS control processing mode and/or a general bearer based QoS control processing mode, etc. As a result, in the subsequent procedures, if the bearer information matches the processing condition(s), the TPF processes the bearer according to the processing mode corresponding to the matched processing condition.

The previous description of the disclosed embodiments is provided to enable those skilled in the art to make or use the present invention. Various modifications to these embodiments will be readily apparent to those skilled in the art and generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A method for charging a bearer, comprising:
determining (203), by a Traffic Plane Function TPF, whether bearer information of a bearer matches a processing condition upon monitoring(202) an occurrence of an event associated with the bearer;
charging (204) the bearer according to a processing mode corresponding to the processing condition if the bearer information matches the processing condition, wherein the processing condition and the processing mode corresponding to the processing condition are preset in the TPF without interaction with a service data flow based manager entity; or
performing (205) a service data flow based charging for the bearer if the bearer information does not match the processing condition, said step of performing (205) a service data flow based charging for the bearer comprises interaction with the service data flow based manager entity.

2. A method according to Claim 1, wherein the processing condition and the processing mode corresponding to the processing condition are received by the TPF from a service data flow based manager entity and stored in the TPF.

3. A method according to Claim 2, wherein the processing condition and the processing mode corresponding to the processing condition are received when a network is upgraded to support service data Flow Based Charging, FBC, attributes.

4. A method according to Claim 2 or 3, further comprising:
receiving a changed processing condition and a changed processing mode corresponding to the changed processing condition, when the processing condition or the processing mode is changed; and
replacing the processing condition and the processing mode corresponding to the processing condition by the changed processing condition and the changed processing mode.

5. A method according to any of Claims 1to 4, wherein the processing condition comprises the bearer information which can identify the bearer.

6. A method according to any of Claims 1 to 5, wherein the processing condition comprises an Access Point Name, APN, and/or an IP 5 tuple.

7. A method according to any of Claims 1 to 6, wherein the event associated with the bearer comprises: bearer establishment, bearer modification or bearer deletion.

8. A method according to any of Claims I to 7, wherein the processing mode comprises a general bearer based charging mode.

9. A method according to Claim 8, wherein the general bearer based charging mode comprises: a General Packet Radio Service, GPRS, general bearer based charging mode and/or a data service general bearer based charging mode.

10. A method according to any of Claims 1 to 7, wherein the processing mode comprises a general bearer service Quality of Service, QoS, control mode.

11. A method according to Claim 10, wherein the general bearer service QoS control mode comprises: a GPRS general bearer service QoS control mode and/or a data service general bearer service QoS control mode.

12. A method according to any of Claims 1 to 11, wherein multiple processing conditions and processing modes are employed, and
the method further comprises:
setting priorities of the processing conditions; and
the determining whether the bearer information of the bearer matches the processing condition comprising:
comparing the bearer information of the bearer with the processing conditions according to the priorities of the processing conditions and determining whether the bearer information of the bearer matches the processing conditions.

13. A Traffic Plane Function TPF device for charging a bearer, comprising:
means for determining whether bearer information of a bearer matches a processing condition upon monitoring an occurrence of an event associated with the bearer;
means for charging the bearer according to a processing mode corresponding to the processing condition if the bearer information matches the processing condition, wherein the processing condition and the processing mode corresponding to the processing condition are preset in the TPF, without interaction with a service data flow based manager entity; and
means for performing a service data flow based charging for the bearer if the bearer information does not match the processing condition, said service data flow based charging for the bearer comprises interaction with the service data flow based manager entity.

14. A TPF device according to claim 13, further comprising means for setting the processing condition and the processing mode corresponding to the processing condition in the TPF.

15. A TPF device according to claim 13, further comprising:
means for receiving the processing condition and the processing mode corresponding to the processing condition from a service data flow based manager entity; and
means for storing the processing condition and the processing mode corresponding to the processing condition in the TPF.

16. A TPF device according to claim 14, wherein when multiple processing conditions and processing modes are employed, the TPF further comprises means for setting priorities of the processing conditions, and
means for matching the bearer information of the bearer with the processing conditions according to the priorities of the processing conditions and determining whether the bearer information of the bearer matches the processing conditions.

17. A TPF device according to claim 15, wherein the means for receiving is further configured to receive priorities of the processing conditions from the service data flow based manager entity when multiple processing conditions and processing modes are employed, and
the means for determining is configured to determine whether the bearer information of the bearer matches the processing conditions according to the priorities of the processing conditions.

## Patentansprüche

1. Verfahren zur Vergebührung eines Trägers, mit den folgenden Schritten:
Bestimmen (203) durch eine Traffic Plane Function TPF, ob Trägerinformationen eines Trägers mit einer Verarbeitungsbedingung übereinstimmen, wenn ein Auftreten eines mit dem Träger assoziierten Ereignisses überwacht wird (202);
Vergebühren (204) des Trägers gemäß einem der Verarbeitungsbedingung entsprechenden Verarbeitungsmodus, wenn die Trägerinformationen mit der Verarbeitungsbedingung übereinstimmen, wobei die Verarbeitungsbedingung und der der Verarbeitungsbedingung entsprechende Verarbeitungsmodus in der TPF ohne Interaktion mit einer auf Dienstdatenfluss basierenden Managerentität voreingestellt sind; oder
Durchführen (205) einer auf Dienstdatenfluss basierenden Vergebührung für den Träger, wenn die Trägerinformationen nicht mit der Verarbeitungsbedingung übereinstimmen, wobei der Schritt des Durchführens (205) einer auf Dienstdatenfluss basierenden Vergebührung für den Träger Interaktion mit der auf Dienstdatenfluss basierenden Managerentität umfasst.

2. Verfahren nach Anspruch 1, wobei die Verarbeitungsbedingung und der der Verarbeitungsbedingung entsprechende Verarbeitungsmodus durch die TPF von einer auf Dienstdatenfluss basierenden Managerentität empfangen und in der TPF gespeichert werden.

3. Verfahren nach Anspruch 2, wobei die Verarbeitungsbedingung und der der Verarbeitungshedingung entsprechende Verarbeitungsmodus empfangen werden, wenn ein Netzwerk aufgerüstet wird, um Attribute der auf Dienstdatenfluss basierenden Vergebührung FBC zu unterstützen.

4. Verfahren nach Anspruch 2 oder 3, ferner mit den folgenden Schritten:
Empfangen einer geänderten Verarbeitungsbedingung und eines der geänderten Verarbeitungsbedingung entsprechenden geänderten Verarbeitungsmodus, wenn die Verarbeitungsbedingung oder der Verarbeitungsmodus geändert werden; und
Ersetzen der Verarbeitungsbedingung und des der Verarbeitungsbedingung entsprechenden Verarbeitungsmodus durch die geänderte Verarbeitungsbedingung und den geänderten Verarbeitungsmodus.

5. Verfahren nach einem der Ansprüche 1 bis 4, wobei die Verarbeitungsbedingung die Trägerinformationen umfasst, die den Träger identifizieren können.

6. Verfahren nach einem der Ansprüche 1 bis 5, wobei die Verarbeitungsbedingung einen Zugangspunktnamen APN und/oder ein IP-5-Tupel umfasst.

7. Verfahren nach einem der Ansprüche 1 bis 6, wobei das mit dem Träger assoziierte Ereignis Folgendes umfasst: Trägerherstellung, Trägermodifikation oder Trägerlöschung.

8. Verfahren nach einem der Ansprüche 1 bis 7, wobei der Verarbeitungsmodus einen allgemeinen auf Trägern basierenden Vergebührungsmodus umfasst.

9. Verfahren nach Anspruch 8, wobei der allgemeine auf Trägern basierende Vergebührungsmodus Folgendes umfasst: einen allgemeinen auf Trägern basierenden Vergebührungsmodus des General Packet Radio Service GPRS und/oder einen allgemeinen auf Trägern basierenden Vergebührungsmodus für Datendienst.

10. Verfahren nach einem der Ansprüche 1 bis 7, wobei der Verarbeitungsmodus einen Dienstgüte- bzw. QoS-Steuermodus des allgemeinen Trägerdienstes umfasst.

11. Verfahren nach Anspruch 10, wobei der QoS-Steuermodus des allgemeinen Trägerdienstes Folgendes umfasst: einen QoS-Steuermodus des allgemeinen Trügerdienstes für GPRS und/oder einen QoS-Steuermodus des allgemeinen Trägerdienstes für Datendienst.

12. Verfahren nach einem der Ansprüche 1 bis 11, wobei mehrere Verarbeitungsbedingungen und Verarbeitungsmodi verwendet werden und das Verfahren ferner Folgendes umfasst:
Setzen von Prioritäten der Verarbeitungsbedingungen; und
wobei das Bestimmen, ob die Trägerinformationen des Trägers mit der Verarbeitungsbedingung übereinstimmen, Folgendes umfasst:
Vergleichen der Trägerinformationen des Trägers mit den Verarbeitungsbedingungen gemäß den Prioritäten der Verarbeitungsbedingungen und Bestimmen, ob die Trägerinformationen des Trägers mit den Verarbeitungsbedingungen übereinstimmen.

13. Einrichtung der Traffic Plane Function TPF zum Vergebühren eines Trägers, umfassend:
Mittel zum Bestimmen, ob Trägerinformationen eines Trägers mit einer Verarbeitungsbedingung übereinstimmen, wenn ein Auftreten eines mit dem Träger assoziierten Ereignisses überwacht wird;
Mittel zum Vergebühren des Trägers gemäß einem der Verarbeitungsbedingung entsprechenden Verarbeitungsmodus, wenn die Trägerinformationen mit der Verarbeitungsbedingung übereinstimmen, wobei die Verarbeitungsbedingung und der der Verarbeitungsbedingung entsprechende Verarbeitungsmodus in der TPF ohne Interaktion mit einer auf Dienstdatenfluss basierenden Managerentität voreingestellt sind; und
Mittel zum Durchführen einer auf Dienstdatenfluss basierenden Vergebührung für den Träger, wenn die Trägerinformationen nicht mit der Verarbeitungsbedingung übereinstimmen, wobei die auf Dienstdatenfluss basierende Vergebührung für den Träger Interaktion mit der auf Dienstdatenfluss basierenden Managerentität umfasst.

14. TPF-Einrichtung nach Anspruch 13, ferner mit Mitteln zum Setzen der Verarbeitungsbedingung und des Verarbeitungsmodus entsprechend der Verarbeitungsbedingung in der TPF.

15. TPF-Einrichtung nach Anspruch 13, ferner umfassend:
Mittel zum Empfangen der Verarbeitungsbedingung und des der Verarbeitungsbedingung entsprechenden Verarbeitungsmodus von einer auf Dienstdatenfluss basierenden Managerentität; und
Mittel zum Speichern der Verarbeitungsbedingung und des der Verarbeitungsbedingung entsprechenden Verarbeitungsmodus in der TPF.

16. TPF-Einrichtung nach Anspruch 14, wobei, wenn mehrere Verarbeitungsbedingungen und Verarbeitungsmodi verwendet werden, die TPF ferner Folgendes umfasst: Mittel zum Setzen von Prioritäten der Verarbeitungsbedingungen und
Mittel zum Vergleichen der Trägerinformationen des Trägers mit den Verarbeitungsbedingungen gemäß den Prioritäten der Verarbeitungsbedingungen und zum Bestimmen, ob die Trägerinformationen des Trägers mit den Verarbeitungsbedingungen übereinstimmen.

17. TPF-Einrichtung nach Anspruch 15, wobei die Mittel zum Empfangen ferner dafür ausgelegt sind, Prioritäten der Verarbeitungsbedingungen von der auf Dienstdatenfluss basierenden Managerentität zu empfangen, wenn mehrere Verarbeitungsbedingungen und Verarbeitungsmodi verwendet werden, und
die Mittel zum Bestimmen dafür ausgelegt sind, gemäß den Prioritäten der Verarbeitungsbedingungen zu bestimmen, ob die Trägerinformationen des Trägers mit den Verarbeitungsbedingungen übereinstimmen.

## Revendications

1. Procédé permettant de facturer un support, comprenant :
la détermination (203), par une fonction de plan de trafic (« Traffic Plane Function » ou TPF), du fait que des informations de support, concernant un support, correspondent ou non à une condition de traitement lors de la surveillance (202) de l'apparition d'un événement associé au support,
la facturation (204) du support en fonction d'un mode de traitement correspondant à la condition de traitement si les informations de support correspondent à la condition de traitement, dans lequel la condition de traitement, et le mode de traitement correspondant à la condition de traitement, sont préréglés dans la fonction TPF sans interaction avec une entité de gestion fondée sur un flux de données de service, ou
l'exécution (205) d'une facturation fondée sur un flux de données de service pour le support si les informations de support ne correspondent pas à la condition de traitement, ladite étape d'exécution (205) d'une facturation fondée sur un flux de données de service pour le support comprenant une interaction avec l'entité de gestion fondée sur le flux de données de service.

2. Procédé selon la revendication 1, dans lequel la condition de traitement, et le mode de traitement correspondant à la condition de traitement, sont reçus par la fonction TPF à partir d'une entité de gestion fondée sur le flux de données de service et sont mémorisés dans la fonction TPF.

3. Procédé selon la revendication 2, dans lequel la condition de traitement, et le mode de traitement correspondant à la condition de traitement, sont reçus quand un réseau est mis à jour pour prendre en charge des attributs de facturation fondée sur un flux, FBC, de données de service.

4. Procédé selon la revendication 2 ou 3, comprenant en outre :
la réception d'une condition modifiée de traitement et d'un mode changé de traitement, correspondant à la condition modifiée de traitement, lorsque la condition de traitement ou le mode de traitement est modifié, et
le remplacement de la condition de traitement et du mode de traitement, correspondant à la condition de traitement, par la condition modifiée de traitement et par le mode changé de traitement.

5. Procédé selon l'une quelconque des revendications 1 à 4, dans lequel la condition de traitement comprend les informations du support qui peuvent identifier le support.

6. Procédé selon l'une quelconque des revendications 1 à 5, dans lequel la condition de traitement comprend le nom d'un point d'accès, APN, et/ou un n-uplet au protocole IP 5.

7. Procédé selon l'une quelconque des revendications 1 à 6, dans lequel l'événement associé au support comprend : l'établissement du support, la modification du support ou la suppression du support.

8. Procédé selon l'une quelconque des revendications 1 à 7, dans lequel le mode de traitement comprend un mode général de facturation fondé sur le support.

9. Procédé selon la revendication 8, dans lequel le mode général de facturation fondé sur le support comprend un mode général de facturation fondé sur le support du service général de radiocommunications par paquets, GPRS et/ou un mode général de facturation fondé sur le support de service de données.

10. Procédé selon l'une quelconque des revendications 1 à 7, dans lequel le mode de traitement comprend un mode général de commande de qualité de service, QoS, de service de support.

11. Procédé selon la revendication 10, dans lequel le mode général de commande de qualité de service QoS de service de support comprend : un mode général de commande de qualité de service QoS de service de support du service GPRS et/ou un mode général de commande de qualité de service QoS de service de support de service de données.

12. Procédé selon l'une quelconque des revendications 1 à 11, dans lequel sont utilisés des conditions de traitement et des modes de traitement multiples, et
le procédé comprend en outre :
l'établissement de priorités des conditions de traitement, et
la détermination du fait que les informations de support, concernant le support, correspondent ou non à la condition de traitement comprenant :
la comparaison des informations de support, concernant le support, aux conditions de traitement en fonction des priorités des conditions de traitement, ainsi que la détermination du fait que les informations de support, concernant le support, correspondent ou non aux conditions de traitement.

13. Dispositif de fonction de plan de trafic TPF permettant de facturer un support, comprenant :
un moyen permettant de déterminer si les informations de support, concernant un support, correspondent à une condition de traitement lors de la surveillance de l'apparition d'un événement associé au support,
un moyen permettant de facturer le support en fonction du mode de traitement correspondant à la condition de traitement si les informations de support correspondent à la condition de traitement, où la condition de traitement et le mode de traitement, correspondant à la condition de traitement, sont préréglés dans la fonction TPF, sans interaction avec une entité de gestion fondée sur un flux de données de service, et
un moyen permettant d'exécuter une facturation fondée sur un flux de données de service pour le support si les informations de support ne correspondent pas à la condition de traitement, ladite facturation fondée sur un flux de données de service pour le support comprenant une interaction avec l'entité de gestion fondée sur le flux de données de service.

14. Dispositif de fonction TPF selon la revendication 13, comprenant en outre un moyen pour régler la condition de traitement et le mode de traitement, correspondant à la condition de traitement, dans la fonction TPF.

15. Dispositif de fonction TPF selon la revendication 13, comprenant en outre :
un moyen permettant de recevoir la condition de traitement et le mode de traitement, correspondant à la condition de traitement, provenant d'une entité de gestion fondée sur un flux de données de service, et
un moyen permettant de mémoriser dans la fonction TPF la condition de traitement et le mode de traitement correspondant à la condition de traitement.

16. Dispositif de fonction TPF selon la revendication 14, dans lequel, lorsque des conditions de traitement et des modes de traitement multiples sont utilisés, la fonction TPF comprend en outre un moyen permettant de régler les priorités des conditions de traitement, et
un moyen permettant de faire correspondre les informations de support, concernant le support, avec les conditions de traitement en fonction des priorités des conditions de traitement, ainsi que de déterminer si les informations de support, concernant le support, correspondent aux conditions de traitement.

17. Dispositif de fonction TPF selon la revendication 15, dans lequel le moyen de réception est en outre configuré pour recevoir les priorités des conditions de traitement provenant de l'entité de gestion fondée sur le flux de données de service lorsque des conditions de traitement et des modes de traitement multiples sont utilisés, et
le moyen de détermination est configuré pour déterminer si les informations de support, concernant le support, correspondent aux conditions de traitement en fonction des priorités des conditions de traitement.
